# EUROPEAN PATENT APPLICATION

(11) **EP 1 491 583 A1**
(43) Date of publication of application: **29.12.2004**
(21) Application number: 04013874.5
(22) Date of filing: 14.06.2004
(51) Int. Cl.: C08L 15/00, C08L 31/04

(54) **Polymer blends comprising nitrile rubber**

(30) Priority: 26.06.2003 CA 2436742
(71) Applicant: Bayer Inc., Sarnia, ON N7T 7M2 (CA)
(72) Inventor: Pazur, Richard, Sarnia Ontario N7S 3E5 (CA); Ferrari, Lorenzo, Bright's Grove Ontario N0N 1C0 (CA); Von Hellens, Carl Walter, Bright's Grove Ontario NON 1CO (CA); Campomizzi, Ezio, Sarnia Ontario N7X 1H5 (CA)
(74) Representative: Feldhues, Michael L.F., Dr.

(57) **Abstract**

The present invention relates to a polymer blend comprising of at least two.different hydrogenated nitrile rubbers and at least one olefin-vinylacetate or olefin-acrylate rubber, a rubber compound comprising said polymer blend and at least one filler, a curable rubber compound comprising said rubber compound and at least one vulcanization agent and a shaped article comprising said rubber compound.

## Description

### Field of the Invention.

The present invention relates to a polymer blend comprising of at least two different hydrogenated nitrile rubbers and at least one olefin-vinylacetate or olefin-acrylate rubber, a rubber compound comprising said polymer blend and at least one filler, a curable rubber compound comprising said rubber compound and at least one vulcanization agent and a shaped article comprising said rubber compound.

### Background of the Invention

Hydrogenated nitrile rubbers (HNBR), prepared by the selective hydrogenation of nitrile rubber (NBR, a co-polymer comprising at least one conjugated diene, at least one unsaturated nitrile and optionally further comonomers) are specialty rubbers which have very good heat resistance, excellent ozone and chemical resistance, and excellent oil resistance. Coupled with the high level of mechanical properties of the rubber (in particular the high resistance to abrasion) it is not surprising that HNBR have found widespread use in the automotive (seals, hoses, bearing pads) oil (stators, well head seals, valve plates), electrical (cable sheathing), mechanical engineering (wheels, rollers) and shipbuilding (pipe seals, couplings) industries, amongst others.

EP-A-0 471 250 discloses hydrogenated butadiene/ isoprene/ (meth)-acrylonitrile copolymers, in particular copolymers containing 3.5 to 22% by weight of copolymerized isoprene and 18 to 50% by weight of copolymerized acrylonitrile or methacrylonitrile, and having a degree of hydrogenation, based on the C=C double bonds of the polymer, of at least 85%, that is, an RDB not greater than 15%.

WO-02/16441-A discloses a hydrogenated copolymer of an unsaturated nitrile, butadiene and isoprene, wherein the molar ratio of butadiene to isoprene is less than 3:1.

EP-A-1 081 188 provides a polymer composition comprising a polymer having a main polymer chain derived from at least about 30% by weight of a first monomer which introduces at least one of a secondary carbon and a tertiary carbon to the main polymer chain, and from 0 to about 70% by weight of at least one other monomer; and a salt of a strong base and a weak acid, the salt comprising a metal selected from Group 1 of the Periodic Table of Elements.

EP-A-0 151 691 discloses a blend of 95-5 wt.% of EVA and 5-95 wt.% of HNBR.

Unfortunately, all of the references cited do not solve the problem of providing a polymer compound with elevated heat and fluid resistance.

### Summary of the Invention

In one aspects, the present invention relates to a polymer blend comprising
(i) at least one, preferably statistical, hydrogenated nitrile rubber,
(ii) at least one, preferably statistical, hydrogenated nitrile terpolymer rubber,
(iii) at least one, preferably binary, salt of a strong base and a weak acid comprising a group 1 metal, and
(iv) at least one olefin/vinylacetate or olefin/acrylate rubber.

In another aspect, the present invention relates to a rubber compound comprising said a polymer blend comprising
(i) at least one, preferably statistical, hydrogenated nitrile rubber,
(ii) at least one, preferably statistical, hydrogenated nitrile terpolymer rubber,
(iii) at least one, preferably binary, salt of a strong base and a weak acid comprising a group 1 metal,
(iv) at least one olefin/vinylacetate or olefin/acrylate rubber, and
(v) at least one filler.

In still aspect, the present invention relates to a rubber compound comprising said polymer solution blend comprising
(i) at least one, preferably statistical, hydrogenated nitrile rubber,
(ii) at least one, preferably statistical, hydrogenated nitrile terpolymer rubber,
(iii) at least one, preferably binary, salt of a strong base and a weak acid comprising a group 1 metal,
(iv) at least one olefin/vinylacetate or olefin/acrylate rubber,
(v) at least one filler,
and at least one vulcanization agent.

In still another one of it's aspects, the present invention relates to a shaped article comprising
(i) at least one, preferably statistical, hydrogenated nitrile rubber,
(ii) at least one, preferably statistical, hydrogenated nitrile terpolymer rubber,
(iii) at least one, preferably binary, salt of a strong base and a weak acid comprising a group 1 metal,
(iv) at least one olefin/vinylacetate or olefin/acrylate rubber, and
(v) at least one filler.

### Brief Description of the Drawings

Figure 1 shows the compression set values of examples A through C after aging the compounds 70 and 168 hours at 150°C.
Figure 2 shows the actual change in hardness of examples A through C after aging the compounds for 168 and 504 hours in hot air at 150°C.
Figure 3 shows the percent change in 100% modulus of examples A through C after aging the compounds for 168 and 504 hours in hot air at 150°C.
Figure 4 shows the percent change in elongation of examples A through C after aging the compounds for 168 and 504 hours in hot air at 150°C.
Figure 5 shows the percent change in tensile strength of examples A through C after aging the compounds for 168 and 504 hours in hot air at 150°C.
Figure 6 shows the actual change in hardness of examples A through C after aging the compounds for 168, 504 and 1008 hours in automatic transmission fluid at 150°C.
Figure 7 shows the percent change in 100% modulus of examples A through C after aging the compounds for 168, 504 and 1008 hours in automatic transmission fluid at 150°C.
Figure 8 shows the percent change in elongation change of examples A through C after aging the compounds for 168, 504 and 1008 hours in automatic transmission fluid at 150°C.
Figure 9 shows the percent change in tensile strength of examples A through C after aging the compounds for 168, 504 and 1008 hours in automatic transmission fluid at 150°C.
Figure 10 shows the actual values of volume swell of examples A through C after aging the compounds for 168, 504 and 1008 hours in automatic transmission fluid at 150°C.

### Description of the Invention

As used throughout this specification, the term "nitrile rubber" or NBR is intended to have a broad meaning and is meant to encompass a copolymer having repeating units derived from at least one conjugated diene, at least one alpha,beta-unsaturated nitrile and optionally further copolymerizable monomer(s).

As used throughout this specification, the term "nitrile terpolymer rubber" or "LT-NBR" is intended to have a broad meaning and is meant to encompass a copolymer having (a) repeating units derived from at least one conjugated diene, (b) at least one alpha,beta-unsaturated nitrile, (c) repeating units derived from at least one further monomer selected from the group consisting of conjugated dienes, unsaturated carboxylic acids; alkyl esters of unsaturated carboxylic acids, alkoxyalkyl acrylates and ethylenically unsaturated monomers other than dienes and (d) optionally further copolymerizable monomer(s). If (a) and (c) are conjugated dienes, it is understood that the nitrile terpolymer rubber comprises repeating units derived from at least two different conjugated dienes.

As used throughout this specification, the term "hydrogenated" or HNBR is intended to have a broad meaning and is meant to encompass a NBR wherein at least 10 % of the residual C-C double bonds (RDB) present in the starting NBR are hydrogenated, preferably more than 50 % of the RDB present are hydrogenated, more preferably more than 90 % of the RDB are hydrogenated, even more preferably more than 95 % of the RDB are hydrogenated and most preferably more than 99 % of the RDB are hydrogenated.

The conjugated diene may be any known conjugated diene in particular a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha,beta-unsaturated nitrile may be any known alpha,beta-unsaturated nitrile, in particular a C₃-C₅ alpha,beta-unsaturated nitrile. Preferred C₃-C₅ alpha,beta-unsaturated nitriles are acrylonitrile, methacrylonitrile, ethacrylonitrile and mixtures thereof. The most preferred C₃-C₅ alpha,beta-unsaturated nitrile is acrylonitrile.

The unsaturated carboxylic acid may be any known unsaturated carboxylic acid copolymerizable with the other monomers, in particular a C₃-C₁₆ alpha,beta-unsaturated carboxylic acid. Preferred unsaturated carboxylic acids are acrylic acid, methacrylic acid, itaconic acid and maleic acid and mixtures thereof.

The alkyl ester of an unsaturated carboxylic acid may be any known alkyl ester of an unsaturated carboxylic acid copolymerizable with the other monomers, in particular an alkyl ester of an C₃-C₁₆ alpha,beta-unsaturated carboxylic acid. Preferred alkyl ester of an unsaturated carboxylic acid are alkyl esters of acrylic acid, methacrylic acid, itaconic acid and maleic acid and mixtures thereof, in particular methyl acrylate, 2-ethylhexyl acrylate and octyl acrylate. Preferred alkyl esters include methyl, ethyl, propyl, and butyl esters.

The alkoxyalkyl acrylate may be any known alkoxyalkyl acrylate copolymerizable with the other monomers, in particular methoxyethyl acrylate, ethoxyethyl acrylate and methoxyethoxyethyl acrylate and mixtures thereof

The ethylenically unsaturated monomer may be any known ethylenically unsaturated monomer copolymerizable with the other monomers, in particular allyl glycidyl ether, vinyl chloroacetate, ethylene, butene-1, isobutylene and mixtures thereof.

Preferably, the HNBR comprises in the range of from 40 to 85 weight percent of repeating units derived from one or more conjugated dienes and in the range of from 15 to 60 weight percent of repeating units derived from one or more unsaturated nitriles. More preferably, the HNBR comprises in the range of from 60 to 75 weight percent of repeating units derived from one or more conjugated dienes and in the range of from 25 to 40 weight percent of repeating units derived from one or more unsaturated nitriles. Most preferably, the HNBR comprises in the range of from 60 to 70 weight percent of repeating units derived from one or more conjugated dienes and in the range of from 30 to 40 weight percent of repeating units derived from one or more unsaturated nitriles.

The hydrogenated nitrile rubber (i) must not be the same as the hydrogenated alpha,beta-unsaturated nitrile/ butadiene/isoprene rubber (ii).

In one preferred embodiment, the nitrile terpolymer rubber is a hydrogenated alpha,beta-unsaturated nitrile/ butadiene/isoprene rubber. In accordance with this embodiment, the ratio of repeating units derived from butadiene to repeating units derived from isoprene (butadiene:isoprene ratio) is preferably below 3:1, more preferably below 2:1. The ratio can be as low as 0.1:1, but is preferably not less than 0.5:1. Good results are obtained with a ratio of 1:1 and the preferred range is 0.75:1 to 1:0.75.

The butadiene plus isoprene usually constitute in the range of from 50 to 95% of the copolymer, and the nitrile usually constitutes in the range of from 5 to 50% of the copolymer. For this invention the nitrile content does not normally exceed 36% and is preferably below 30%. The preferred lower limit on the nitrile content is 15%, because copolymers with lower nitrile contents tend to lose their oil resistance. For applications where oil resistance is not of importance, however, lower nitrile contents are acceptable, down to 10% or even 5%. For most purposes a nitrile content of 15 to 25% is preferred.

In another preferred embodiment, the nitrile terpolymer rubber is a hydrogenated alpha,beta-unsaturated nitrile/butadiene/acrylate rubber. The combined butadiene and acrylate content consitute a range of 50 to 95% of the terpolymer, while the nitrile is in the range of 5 to 50%. More peferably, the nitrile range is between 10 and 30%. Commercially available examples of such terpolymers are Therban® LT 2157 (20% nitrile content, 5.5% residual double bonds) and Therban® VP KA 8882 (20% nitrile content, 0.9 % maximum double bond content). Optionally, the hydrogenated nitrile rubber (i) and/or the hydrogenated nitrile terpolymer rubber (ii) may further comprise repeating units derived from one or more copolymerizable monomers. Repeating units derived from one or more copolymerizable monomers will replace either the nitrile or the diene portion of the nitrile rubber and it will be apparent to the skilled in the art that the above mentioned figures will have to be adjusted to result in 100 weight percent.

The third component is a salt of a strong base and a weak acid, the salt comprising a metal selected from Group I of the Periodic Table of Elements.

Non-limiting examples of the weak acids useful in the production of the above-mentioned salt are selected from the group consisting of carbonic acid, C₂-C₅₀ carboxylic acids, ethylene diamine tetra(acetic acid), phosphoric acid and mixtures thereof. The preferred salt for use in the present polymer blend is sodium carbonate, potassium carbonate, sodium stearate, potassium stearate and mixtures thereof. The most preferred salt for use in the present polymer composition is sodium carbonate. Preferably, the salt is present in the polymer blend in an amount in the range of from 0.5 to 50 parts by weight, preferably in the range of from 1 to 20 parts by weight, most preferably in the range of from 2.5 to 7.5 parts by weight.

The olefin/vinylacetate rubber may be any olefin/vinylacetate rubber known in the art.

The olefin may be any known olefin, in particular ethylene, propylene, butenes, pentenes, hexenes, heptenes, octenes and their higher homologues and mixtures thereof.

The olefin/vinylacetate rubber usually comprises in the range of from 10-95 wt.%, preferably 25-90 wt%., of repeating units derived from the olefin monomer(s) and in the range of from 5-90 wt.%, preferably 10-75 wt.%, of repeating units derived from the vinylacetate. Preferred are olefin/vinylacetate rubbers available under the trade-name LEVAPREN™ from Bayer AG.

The olefin/acrylate rubber may be any olefin/ acrylate rubber known in the art.

The olefin may be any known olefin, in particular ethylene, propylene, butenes, pentenes, hexenes, heptenes, octenes and their higher homologues and mixtures thereof.

The acrylate may be any known acrylate copolymerizable with the olefin, in particular acrylic acid and derivatives such as methacrylic acid and methylmethacrylate.

The olefin/acrylate rubber usually comprises in the range of from 10-95 wt.%, preferably 25-90 wt%., of repeating units derived from the olefin monomer(s) and in the range of from 5-90 wt.%, preferably 10-75 wt.%, of repeating units derived from the acrylate(s). Preferred are olefin/acrylate rubbers available under the trade-name VAMAC™ from DuPont.

The inventive blend may comprise one or more olefin/vinylacetate rubbers or one or more olefin/acrylate rubbers or combinations of one or more olefin/vinylacetate rubbers and one or more olefin/acrylate rubbers.

The composition of the inventive polymer blend may vary in wide ranges and thus it is possible to tailor the properties of the final compound as well as the properties of the final shaped article. Usually, said blend comprises in the range of from 1 to 40 wt.%, preferably from 10 to 20 wt.%, of at least one, preferably statistical, hydrogenated nitrile rubber, in the range of from 5 to 95 wt.%, preferably from 30 to 70 wt.%, of at least one, preferably statistical, hydrogenated nitrile terpolymer rubber , and in the range of from 95 to 5 wt.%, preferably from 70 to 30 wt.%, of one or more olefin/vinylacetate rubbers and/or one or more olefin/acrylate rubbers.

The Mooney viscosity of said polymers in said polymer blend may also vary in wide ranges and thus it is possible to tailor the properties of the final compound as well as the properties of the final shaped article. Usually, said components (i) and (ii) may have a Mooney viscosity ML(1+4@ 100°C) of in the range of from 20 to 100 MU, preferably 40 to 80 MU. Usually said component(s) (iv) may have a Mooney viscosity ML (1+4@ 100°C) of in the range of from 15 to 90 MU, preferably 20 to 70 MU.

The Mooney viscosity of the raw rubbers, the polymer blend and the rubber compound can be determined using ASTM test D1646.

While it is not preferred, the inventive blend may further comprise up to 25 phr of other polymers such as polyolefins, BR (polybutadiene), ABR (butadiene/acrylic acid-C₁-C₄-alkylester-copolymers), CR (polychloroprene), IR (polyisoprene), SBR (styrene/butadiene-copolymers) with styrene contents in the range of 1 to 60 wt%, EPDM (ethylene/propylene/diene-copolymers), FKM (fluoropolymers or fluororubbers), and mixtures of the given polymers. Careful blending with said other polymers often reduces cost of the polymer blend without sacrificing to much of the desired final properties of the compound. The amount of other polymers will depend on the process condition to be applied during manufacture of shaped articles and the targeted final properties and is readily available by few preliminary experiments.

In order to prepare a rubber compound based on said inventive polymer blend; preferably at least one filler has to be added.

The filler(s) may be an active or an inactive filler or a mixture thereof. The filler(s) may be in particular:
- highly dispersed silicas, prepared e.g. by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
- large aspect ratio nanoclays such as Cloisite®
or mixtures thereof.

Examples of preferred mineral fillers include silica, silicates, clay such as bentonite, gypsum, alumina, titanium dioxide, talc, mixtures of these, and the like. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, in the range from 50 and 450 square meters per gram and a DBP absorption, as measured in accordance with DIN 53601, in the range from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

Often, use of carbon black as a filler is advantageous. Usually, carbon black is present in the polymer blend in an amount of in the range of from 20 to 200 parts by weight, preferably 30 to 150 parts by weight, more preferably 40 to 100 parts by weight. Further, it might be advantageous to use a combination of carbon black and mineral filler in the inventive rubber compound. In this combination the ratio of mineral fillers to carbon black is usually in the range of from 0.05 to 20, preferably 0.1 to 10.

Optionally, the present rubber compound further comprises a carbodiimide, a polycarbodiimide or mixtures thereof. The preferred carbodiimide is available commercially under the tradenames Rhenogram™ P50 and Stabaxol™ P. This ingredient may be used in the present rubber compound in an amount in the range of from 0 to about 15 parts by weight, more preferably in the range of from 0 to about 10 parts by weight, even more preferably in the range of from about 0 to about 3 parts by weight.

Preferably, the inventive rubber compound further comprises an acrylic compound. As used throughout this specification, the term "acrylic compound" is intended to have a broad meaning and is meant to encompass compounds of the general structure [R-CH=CR'COO⁻]ₙ Mⁿ⁺ wherein R and R' are aliphatic or aromatic hydrocarbon groups or hydrogen and are independently selected and are the same or different from each other and M is a metal ion selected from group 2, 12 or 13 (IUPAC 1985) and n is an integer of 2 or 3 as well as liquid acrylates, such as trimethylolpropanetrimethacrylate (TRIM), butanedioldimethacrylate (BDMA) and ethylenglycoldimethacrylate (EDMA). Particular reference is made to acrylates known from EP-A1-0 319 320, in particular p. 3, l. 16 to 35, from US-5 208 294, in particular Col. 2, l. 25 to 40, and from US-4 983 678, in particular Col. 2, l. 45 to 62. Preferred are zinc acrylate, zinc diacrylate or zinc dimethacrylate or a liquid acrylate. It might be advantageous to use a combination of different acrylates and/or metal salts thereof. Of particular advantage is often to use metal acrylates in combination with a Scorch-retarder such as sterically hindered phenols (e.g. methyl-substituted aminoalkylphenols, in particular 2,6-di-tert.-butyl-4-dimethylaminomethylphenol).

In the inventive rubber compound acrylic compounds are present in an amount in the range of from 0 to 100 phr (=parts per hundred parts of rubber), preferably 0.1 to 20 phr, more preferably 0.2 - 7 phr.

Another object of the invention is a vulcanizable rubber compound comprising said inventive rubber compound and one or more vulcanization agents or curing systems. The invention is not limited to a special curing system, however, peroxide curing system(s) are preferred. Furthermore, the invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the polymer blend is in the range of from 1 to 10 phr, preferably from 4 to 8 phr. Subsequent curing is usually performed at a temperature in the range of from 100 to 200 °C, preferably 130 to 180 °C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene).

The vulcanizable rubber composition according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 phr. Preferably the vulcanizable compound comprising said rubber compound further comprises in the range of 0.1 to 20 phr of one or more organic fatty acids as an auxiliary product, preferably an unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8-22 carbon atoms, more preferably 12-18. Examples include stearic acid, palmitic acid and oleic acid and their calcium-, zinc-, magnesium-, potassium- and ammonium salts.

The ingredients of the polymer blend, the rubber compound and the vulcanizable compound are often mixed together, suitably at an elevated temperature that may range from 25 °C to 200 °C. Normally the mixing time does not exceed one hour and a time in the range from 2 to 30 minutes is usually adequate. The mixing of the rubbers, optionally the filler(s), optionally vulcanization agent, and/or further ingredients is suitably carried out in an internal mixer such as a Banbury mixer, or a Haake or Brabender internal mixer. A two roll mill mixer also provides a good dispersion of the compounds within the final product. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

The polymer blend, the rubber compound and the vulcanizable rubber compound are very well suited for the manufacture of a shaped article, such as a seal, hose, bearing pad, stator, well head seal, valve plate, cable sheathing, wheel roller, pipe seal, in place gaskets or footwear component. Furthermore, they are very well suited for wire and cable production.

The polymer blend provides a compound possessing a combination of excellent low and high temperature properties. The said compound has very good resistance to fluids such as mineral and synthetic oils as well as automatic transmission and power steering fluids.

### EXAMPLES

### List of compounding ingredients:

Therban® LT VP KA 8882 (low temperature nitrile terpolymer rubber available from Bayer Inc.)
Therban® HT VP KA 8805 (hydrogenated nitrile rubber available from Bayer Inc.)
Levapren™ 700 HV (ethylene/vinyl acetate copolymer which is 70% by weight vinyl acetate) is available from Bayer Inc..
Carbon black N774 and N 990 are both available from Cabot Corp..
Naugard® 445 is p-dicumyl diphenylamine and is available through Uniroyal Chemicals.
Vulkanox™ ZMB-2/C5 is the zinc salt of 4- and 5-methyl mercaptobenzimidazole (ZMMBI) and is available from Bayer Inc..
Plasthall® TOTM is a trioctyl trimellitate available from The C.P. Hall. Co., Inc..
Zinc Oxide (Kadox™ 920) - zinc oxide by St. Lawrence Chem. Inc.
TAIC-DLC-A is triallyl isocyanurate (72% by weight) on a silicon dioxide carrier available from Natrochem, Inc..
Vulcup® 40KE is bis 2-(t-butyl-peroxy) diisopropylbenzene (40% on Burgess clay) available from Geo Specialty Chemicals, Inc..
Automatic transmission fluid available from Chrysler Corp..

### Description of tests:

### Compound Mooney Viscosity

A large rotor was used for these tests and ASTM method D-1646 was followed. The compound Mooney viscosity was determined at 100°C by preheating the sample 1 minute and then, measuring the torque (Mooney viscosity units) after 4 minutes of shearing action caused by the viscometer disk rotating at 2 r.p.m..

### Cure rheometry:

A Moving Die Rheometer (MDR 2000(E)) using a frequency of oscillation of 1.7 Hz and a 0.5° arc at 170°C for 30 minutes total run time was used to follow the course of the vulcanization. The test procedure follows ASTM D-5289.

### Stress-strain.

Samples were prepared by curing a macro sheet at 170ºC for 21 minutes, after which the appropriate sample was died out into standard ASTM die C dumbells. The test was conducted at 23 ºC.

### Hardness:

All hardness measurements were carried out with an A-2 type durometer which complies with ASTM D-2240

### Hot air aging/stress-strain :

Vulcanized dumbell die C samples were aged for 168 and 504 hrs in a hot air oven at 150°C and then tested at 23°C. This test complies with ASTM standard D-573.

### Immersion aging/stress-strain:

Vulcanized dumbell die C samples were immersed in the testing fluid for 168, 504 and 1008 hours at 150C. Afterwards, the change in stress-strain properties were measured according to ASTM D-471. Volume change upon immersion aging was also determined using ASTM D-471.

### Examples A-C:

Three rubber compounds were prepared. The ingredients are listed in Table 1. The compounds ingredients were mixed on a BR-82 Banbury™ internal mixer having a mixing capacity of 1.6L. The rotors turned at 55 r.p.m. and the cooling water was set at 30°C. A fill factor of 73% was used. At 0 minutes, the polymers were added and allowed to mix for 1.5 minutes. Then, the carbon blacks, zinc oxide, antioxidant system and plasticizer were added. The ram was again lowered and mixing took place for 1.5 minutes after which a sweep was carried out. The compound was again mixed for an additional 1.5 minutes and finally dumped at 6 minutes. Temperatures of the mixed batches did not exceed 140°C. The peroxide and its coagent were added on a cool (30°C) two-roll (10" × 20") mill and the compound was refined using ¾ cuts and finally 6 endwise passes.

Table 1 shows the ingredients for the compounds A, B and C in phr:

**Table 1:**

| **Example** | **A** | **B** | **C** |
|---|---|---|---|
| Levapren™ 700 HV | 0 | 30 | 30 |
| Therban® HT VP KA 8805 | 15 | 0 | 15 |
| Therban® LT VP KA 8882 | 92 | 70 | 62 |
| Carbon black, N 774 | 40 | 40 | 40 |
| Carbon black, N 990 | 30 | 30 | 30 |
| Naugard® 445 | 0 | 1.1 | 0 |
| Plasthall® TOTM | 7 | 7 | 7 |
| Vulkanox™ ZMB-2/C5 (ZMMBI) | 0 | 0.4 | 0 |
| Zinc Oxide (Kadox™ 920) | 3 | 3 | 3 |
| TAIC-DLC-A | 2 | 2 | 2 |
| Vulcup® 40KE | 9 | 9 | 9 |

Then the blends were analyzed. The processing, curing and physical property characteristics of the polymer blends A-C are shown in Table 2.

**Table 2:**

| **Example** | **A** | **B** | **C** |
|---|---|---|---|
| **COMPOUND MOONEY VISCOSITY** | | | |
| ML 1+4 @ 100ºC | 65.0 | 48.8 | 46.0 |
| Time to Decay 80% (min) | 0.07 | 0.07 | 0.06 |
| Slope (IgM/Igs) | -0.4484 | -0.4221 | -0.4526 |
| Intercept (MU) | 24.6 | 18.2 | 16.8 |
| Area Under Curve | 872.1 | 716.2 | 585.8 |
| | | | |

| **MDR CURE CHARACTERISTICS** | | | |
|---|---|---|---|
| 1.7Hz; 170°C; 0.5°arc; 30' | | | |
| MH (dN.m) | 45.11 | 43.38 | 46.16 |
| ML (dN.m) | 2.54 | 1.97 | 2.02 |
| Delta MH-ML (dN.m) | 42.57 | 41.41 | 44.14 |
| ts 2 (min) | 0.93 | 0.90 | 0.90 |
| t' 50 (min) | 5.21 | 4.44 | 4.54 |
| t' 90 (min) | 14.52 | 12.73 | 13.31 |
| Delta t'50 - t'10 (min) | 3.77 | 3.12 | 3.19 |
| | | | |

| **STRESS STRAIN (DUMBELLS)** | | | |
|---|---|---|---|
| Cure Time @ 170ºC (min) | 21 | 21 | 21 |
| Stress @ 10 (MPa) | 0.64 | 0.64 | 0.7 |
| Stress @ 25 (MPa) | 1.23 | 1.22 | 1.37 |
| Stress @ 50 (MPa) | 2.54 | 2.58 | 3.06 |
| Stress @ 100 (MPa) | 7.79 | 8.7 | 10.07 |
| Stress @ 200 (MPa) | | | |
| Ultimate Tensile (MPa) | 18.77 | 19.65 | 20.15 |
| Ultimate Elongation (%) | 182 | 171 | 165 |
| Hardness Shore A2 (pts.) | 66 | 65 | 68 |

Table 2 shows that processing of the HNBR blend (A) is improved by adding Levapren™ 700 HV (B and C) to the blend. It is known that lower compound Mooney viscosities would help compound flow, particularly in injection moulding type applications. The level of crosslinking is enhanced in the ternary blend (C) compared to A and B. With respect to curing behaviour, similar times to 50 and 90% cures were recorded for all three compounds. The improved crosslink density achieved with blend C provides for a higher unaged hardness, modulus and tensile strength without a significant loss in the elongation values.

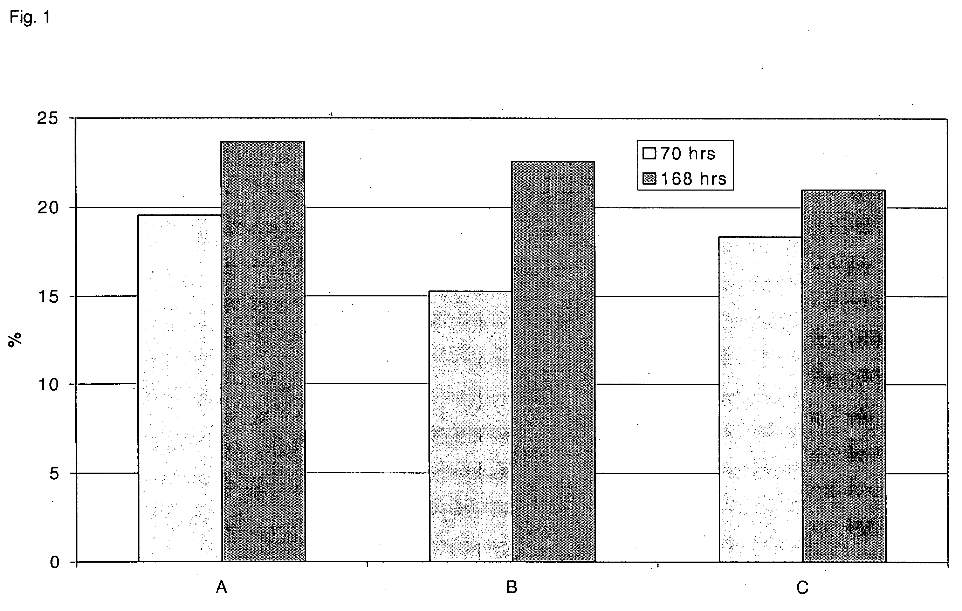

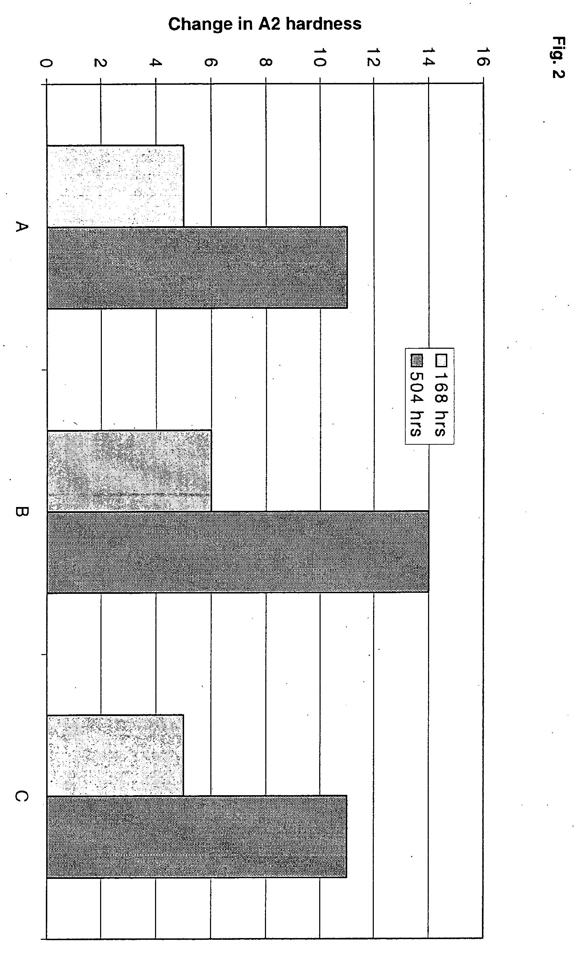

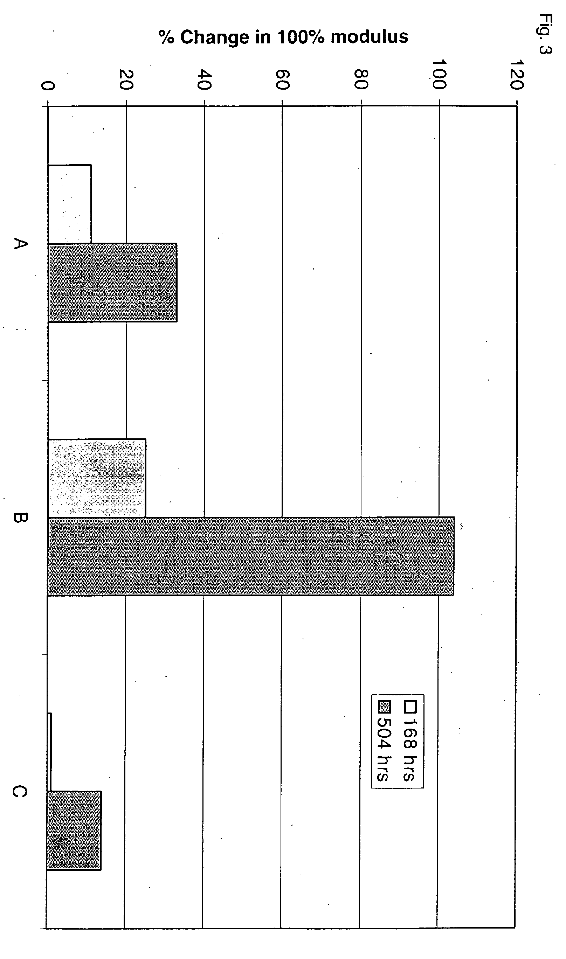

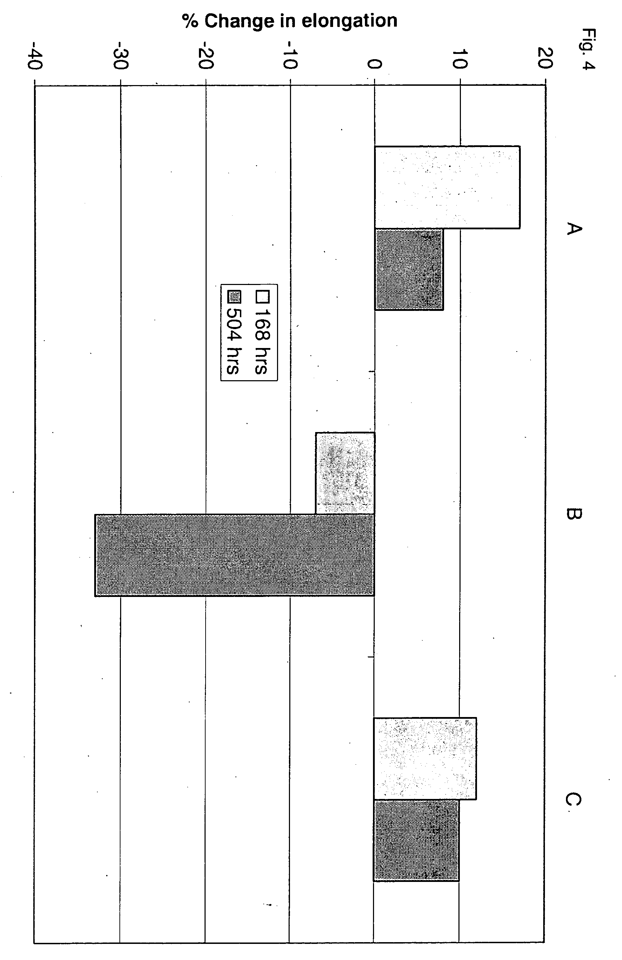

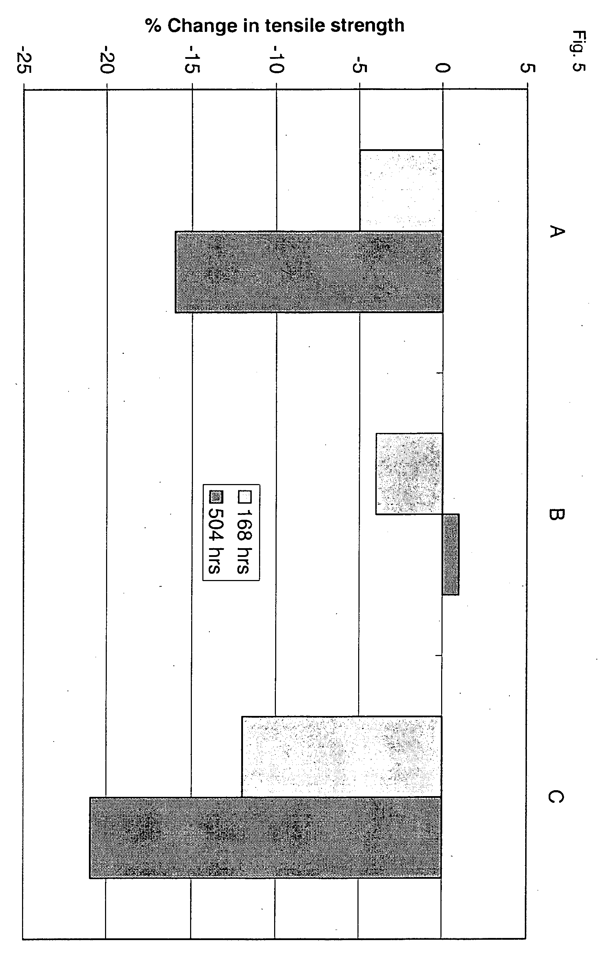

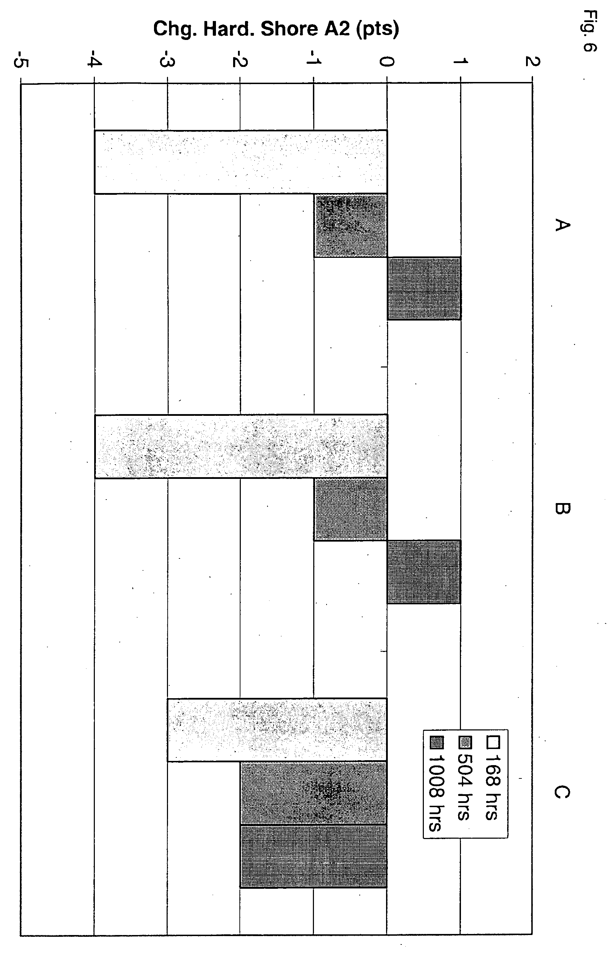

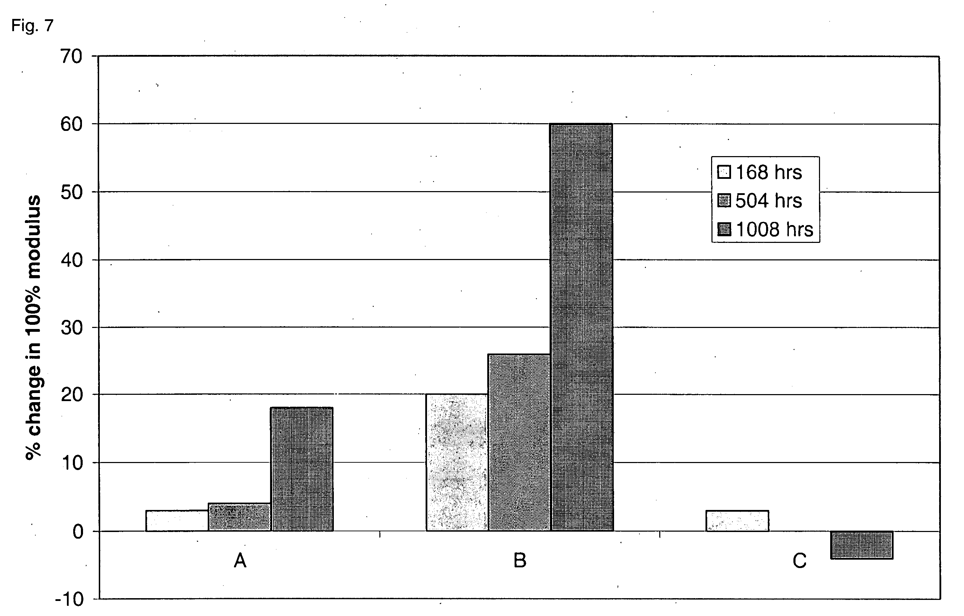

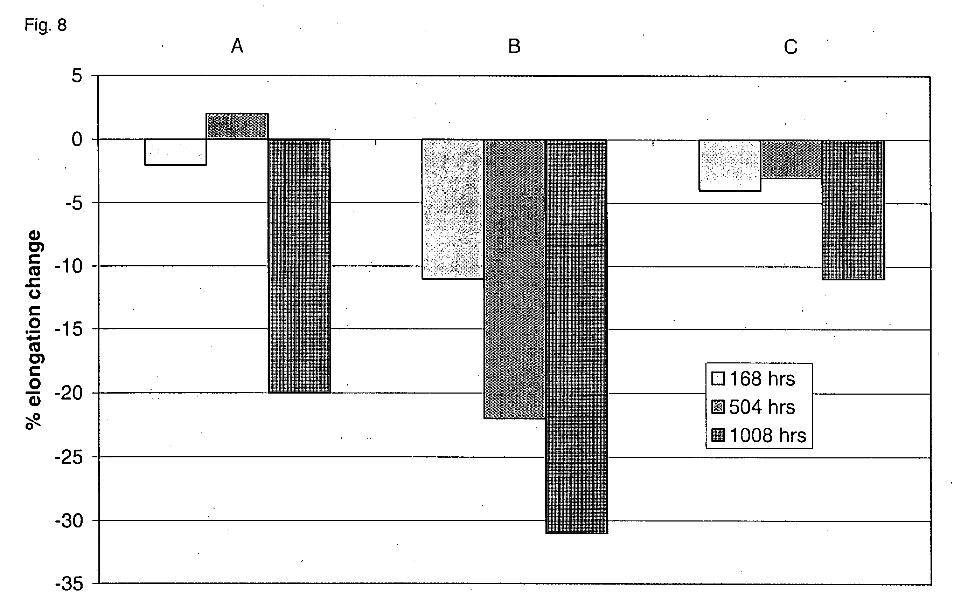

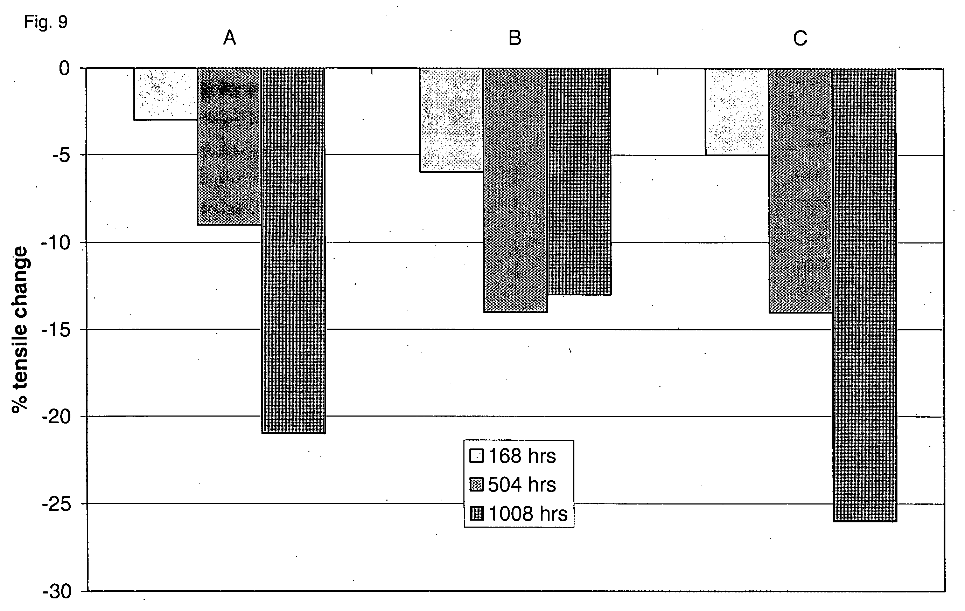

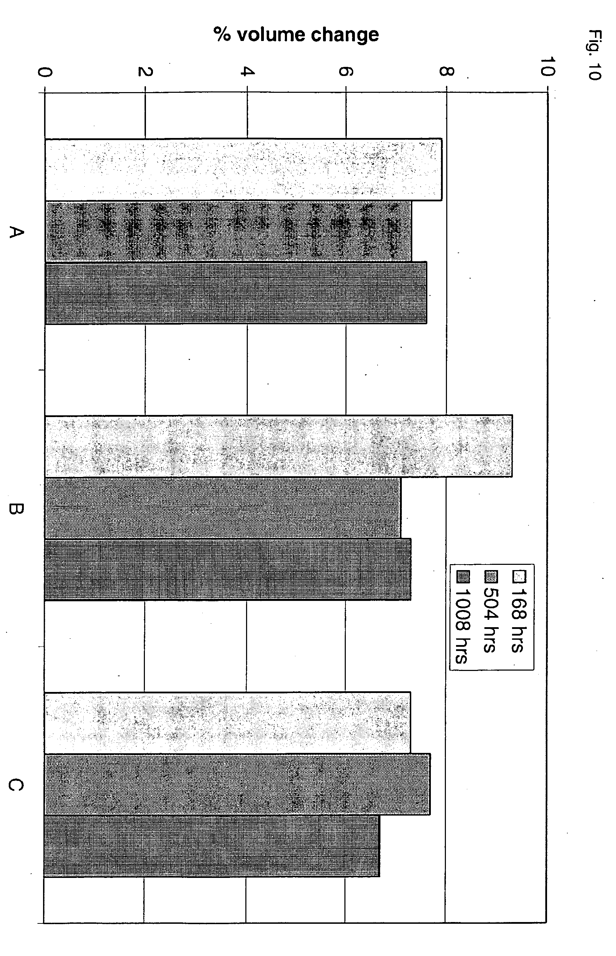

Figure 1 shows the improvement in compression set values achieved by using the ternary blend C over both blends A and B. This effect is particularly evident after 168 hrs of aging. Compression set is an important property in the area of gaskets and seals. Figures 2 to 5 illustrate the hot air aging of the blends at 150°C in tensile testing. In figure 2, blend B shows an increase in hardening upon aging compared to both A and C. Hardening in such rubber compounds can lead to surface cracking and poor seal retention in gasketing type applications. The hardening effect is best exemplified by using the change in 100% modulus values seen in figure 3. Again, compound B shows a significant amount of hardening, particularly after 504 hrs. It also becomes clear from this data that compound A hardens to a greater extent than compound C. Change in elongation in hot air aging is indicative of oxidative degradation taking place in the compound. As seen in figure 4, compound B loses over 30 % of its elongation after 504 hrs. Both compounds A and C have slight increases in elongation change with compound C showing overall less change in elongation. In figure 5, the apparent good tensile strength retention of compound B is actually a combination of hardening and cross-link density loss. The tensile loss in compounds A and C is acceptable. Figures 6 to 10 show immersion aging test results in automatic transmission fluid. Samples were aged at 150°C for 168, 504 and 1008 hours. HNBR compounds generally harden upon aging in fluids such as ATF. This is seen in both the binary blends A and B, however in C, the compound remains soft even after 1008 hrs of aging. This effect is magnified when one looks at the change in 100% modulus in figure 7. Compound B shows a high level of hardening, while A starts to harden at 1008 hrs. On the other hand, compound C displays little to no hardening for up to 1008 hrs. Figure 8 shows that compound B loses an important percentage of elongation as a function of ATF aging. Compounds A and C show similar elongation retention up to 504 hrs, however, compound C clearly outperforms A at 1008 hrs. The tensile loss (figure 9) is similar for all three compounds, however one must remember that compounds A and B have less crosslink density and are hardening to a greater extent that C. The volume swell results seen in figure 10 are slightly lower in compound C compared to both A and B.

## Claims

1. A polymer blend comprising
(i) at least one hydrogenated nitrile rubber,
(ii) at least one hydrogenated nitrile terpolymer rubber rubber,
(iii) at least one salt of a strong base and a weak acid comprising a group 1 metal, and
(iv) at least one olefin/vinylacetate and/or olefin/acrylate rubber.

2. A polymer blend according to claim 1 wherein the hydrogenated nitrile terpolymer rubber is a alpha,beta-unsaturated nitrile/ butadiene/isoprene rubber and has a ratio of repeating units derived from butadiene to repeating units derived from isoprene of lower than 3:1.

3. A polymer blend according to claim 1 or 2, wherein the nitrile is acrylonitrile.

4. A polymer blend according to any of claims 1-3, comprising an olefin/vinylacetate rubber.

5. A rubber compound comprising a polymer blend according to any of claims 1-4 and at least one filler.

6. A vulcanizable rubber compound comprising a polymer blend according to any of claims 1-3 or a rubber compound according to claim 4 and at least one vulcanization agent.

7. A vulcanizable rubber compound according to claim 6 wherein said vulcanization agent is a peroxide.

8. A shaped article comprising a compound according to any of claims 1-5.

9. A shaped article according to claim 8 in the form of a seal, gasket, belt, hose, bearing pad, stator, well head seal, valve plate, cable sheathing, wheel roller, in place gasket or pipe seal.
